# EUROPEAN PATENT SPECIFICATION

(11) **EP 4 179 399 B1**
(45) Date of publication and mention of the grant of the patent: **25.03.2026**
(21) Application number: 20949182.8
(22) Date of filing: 14.08.2020
(51) Int. Cl.: G05B 23/02

(54) **A METHOD, DEVICE, SYSTEM AND STORAGE MEDIUM FOR FAULT DIAGNOSIS AND SOLUTION RECOMMENDATION**
VERFAHREN, VORRICHTUNG, SYSTEM UND SPEICHERMEDIUM ZUR FEHLERDIAGNOSE UND LÖSUNGSEMPFEHLUNG
PROCÉDÉ, DISPOSITIF, SYSTÈME ET SUPPORT DE STOCKAGE POUR DIAGNOSTIC DE DÉFAILLANCE ET RECOMMANDATION DE SOLUTION

(43) Date of publication of application: 17.05.2023
(73) Proprietor: Siemens Aktiengesellschaft, 80333 München (DE)
(72) Inventor: ROUX, Armin, 91052 Erlangen (DE); ZHANG, Bin, Beijing 102218 (CN); SUN, Zhong Yang, Beijing 102208 (CN); FAN, Shun Jie, Beijing 100102 (CN); JIE, Ming, Beijing 100102 (CN)
(74) Representative: Isarpatent
(86) International application number: PCT/CN2020/109364
(87) International publication number: WO 2022/032684

(56) References cited:
- WO-A1-2019/061481
- CN-A- 102 183 945
- CN-A- 102 571 987
- CN-A- 105 391 579
- CN-A- 106 254 139
- US-A1- 2010 082 125
- US-A1- 2014 310 222
- US-A1- 2018 131 907

## Description

### FIELD

The present disclosure relates to computer technologies, and more particularly, to a method, device, system and computer readable storage medium for fault diagnosis and solution recommendation.

### BACKGROUND

Digital technology refers to a technology with which computers and networks are used to achieve digital. Digital technology has been applied to a variety of industries and fields, such as traditional manufacturing plants. Digital factory is to provide digital and information services for traditional manufacturing plants by using computer hardware and software technology. Digital factory integrates various systems and databases of factory, product and control, and improves the flexibility and efficiency of factory manufacturing process by means of visualization, simulation and big data.

In modern digital factories, it is difficult for workers to solve unexpected problems in time. Therefore, an intelligent diagnosis and solution recommendation system for factory conditions is necessary.
US 2018/131907 A1 relates to a system and method using augmented reality (AR) and virtual reality (VR) technologies in industrial automation environments.
US 2010/082125 A1 relates to a system for guiding industrial processes using key performance indicators (KPIs) and human-machine interfaces (HMIs).
US 2014/310222 A1 discloses a cloud-based diagnostic system aimed at troubleshooting hardware and software issues in electronic devices.

### SUMMARY

According to examples of the present disclosure, a method, device, system and computer readable storage medium for fault diagnosis and solution recommendation is provided to achieve the intelligent fault diagnosis and solution recommendation and improves the flexibility and efficiency of fault diagnosis and solution recommendation.

The present invention is set forth and characterized in the independent claims, while the dependent claims describe other characteristics of the invention.

In the present disclosure, because all of the fault analysis, fault diagnosis and solution recommendation are performed by the third party, the user only needs to do some simple operations without analyzing the fault reason, thus the intelligent fault diagnosis and solution recommendation is achieved, and the flexibility and efficiency of fault diagnosis and solution recommendation is improved.

### BRIEF DESCRIPTION OF THE DRAWINGS

For a better understanding of the present disclosure, reference should be made to the Detailed Description below, in conjunction with the following drawings in which like reference numerals refer to corresponding parts throughout the figures.
Figure 1 is a flow diagram illustrating a method for fault diagnosis and solution recommendation according to examples of the present disclosure.
Figure 2 is a schematic diagram illustrating an application scenario according to an example of the present disclosure.
Figure 3 is a flow diagram illustrating method for fault diagnosis and solution recommendation based on the application scenario shown in figure 2 according to an example of the present disclosure.
Figure 4 is a schematic diagram illustrating the working principle of the data stream analysis package in the application scenario shown in figure 2 according to an example of the present disclosure.
Figure 5 is a flow diagram illustrating a data stream analysis method performed by the data stream analysis package shown in figure 4.
Figure 6 is a schematic diagram illustrating the working principle of the multimedia content analysis package in the application scenario shown in figure 2 according to an example of the present disclosure.
Figure 7 is a flow diagram illustrating a multimedia content analysis method performed by the multimedia content analysis package shown in figure 6.
Figure 8 is a schematic diagram illustrating a device for fault diagnosis and solution recommendation according to examples of the present disclosure.
Figure 9 is a schematic diagram illustrating another device for fault diagnosis and solution recommendation according to examples of the present disclosure.

The reference numerals are as follows:

| Reference numeral | Object |
|---|---|
| 101~104, 301~313, 401~404, 501~512, 601~602, 701-711 | processes |
| 1 | database layer |
| 11 | task management database |
| 12 | image database |
| 13 | instructional resources knowledge map |
| 2 | analysis layer |
| 21 | data stream analysis package |
| 22 | multimedia content analysis package |
| 23 | diagnosis package |
| 24 | recommendation engine |
| 31 | motor |
| 32 | PLC |
| 33 | CNC |
| 81 | data obtaining module |
| 82 | fault analysis module |
| 821 | data stream analysis module |
| 822 | multimedia content analysis module |
| 83 | fault diagnosis module |
| 84 | solution recommendation module |
| 91 | memory |
| 92 | processor |

### DETAILED DESCRIPTION

In the embodiment of the present disclosure, it is considered that in the digital factories, some devices such as most CNC machines have their own diagnostic programs, but most of them performs judgment according to the established mode, and cannot perform diagnosis according to the characteristics of specific tasks. In addition, diagnostic programs of some control system also recommend some solutions, but most of these solutions are usually limited to the documents stored in advance. In addition, most of the diagnostic programs are based on the data collected by the device itself, and it is difficult to diagnose the faults that need to be detected by sensors.

Therefore, an intelligent fault diagnosis and solution recommendation scheme is provided in the embodiments of the disclosure.

Reference will now be made in detail to examples, which are illustrated in the accompanying drawings. In the following detailed description, numerous specific details are set forth in order to provide a thorough understanding of the present disclosure. Also, the figures are illustrations of an example, in which modules or procedures shown in the figures are not necessarily essential for implementing the present disclosure. In other instances, well-known methods, procedures, components, and circuits have not been described in detail so as not to unnecessarily obscure aspects of the examples.

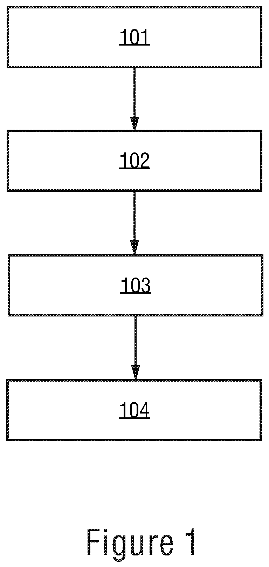

Figure 1 is a flow diagram illustrating a method for fault diagnosis and solution recommendation according to examples of the present disclosure. As shown in figure 1, the method may include the following processes.

At block 101, original data including fault problem of a target device is obtained.

The original data may be obtained by a data collection module of a robot, such as a knowledge transfer robot.

In specific implementations, the original data may include the data stream including an error signal, device identification (such as machine number) and time information (such as timestamp) reported or uploaded by a device based on OPC UA. The data stream here can include the data collected by the device itself and the data collected by the sensor.

In an example, the data stream, device identification and time information may be obtained at a set frequency. In response to receiving a fault report from a user, the corresponding data stream of the target device may be extracted from the obtained data stream according to the device identification and time information provided by the fault report. For example, when a fault occurs, the user may call the cloud robot, and report the device identification of the target device on which the fault occurs and time information when the fault occurs to the robot.

In addition, the original data may include fault multimedia content. The fault multimedia content may include: a video containing fault process or a photo containing fault area. For example, when a fault occurs, the user may take a video or a photo, and send the video or the photo to the robot.

At block 102, the original data including fault problem is analyzed, and problem description information is obtained.

In specific implementations, the original data including fault problem may be analyzed by a fault analysis package of the robot.

When the original data includes the data stream with device identification and time information, the fault analysis package may include a data stream analysis package, and the data stream analysis package may find a corresponding task document from a task management database according to the device identification and time information of the target device. The task management database stores task documents including the standard processes and steps of each task of each device. According to the standard processes and steps in the task document, the data stream analysis package divides the data stream collected from the target device into corresponding data segments, and to determine a target step with a fault by locating an error signal in a data segment. The data stream analysis package compares the part corresponding to the target step in the task document with that in the data stream and analyzes the fault reason based on the comparison, and generates the problem description information.

In an example, the task management database may be a cloud task management database. With the cloud task management database, the task documents stored in the cloud task management database may be shared by different factories.

When the original data includes the multimedia content, the fault analysis package may include a multimedia content analysis package, and the multimedia content analysis package may input the fault multimedia content into a fault analysis model trained in advance based on convolutional neural network, and obtain the problem description information output by the fault analysis model. The fault analysis model is trained by taking a large number of historical fault multimedia content as input samples, and taking corresponding historical problem description information of fault multimedia content as output samples. The historical fault multimedia content and the corresponding historical problem description information of fault multimedia content may be stored in an image database.

In an example, the fault analysis model may include a multimedia content classification model and a number of fault analysis sub models. The multimedia content classification model is configured to classify the multimedia content, and input the multimedia content to a corresponding fault analysis sub model according to a classification result. Each fault analysis sub model is configured to output the corresponding problem description information according to the input multimedia content.

Furthermore, the multimedia content analysis package feeds back the problem description information to the user for checking, and receives problem description information confirmed by the user. When the problem description information fed back by the multimedia content analysis package meets the actual problem, the user will directly confirm it, and the problem description information confirmed by the user is the same as that fed back by the multimedia content analysis package; when the problem description information fed back by the multimedia content analysis package does not meet the actual problem, the user will manually write a new piece of problem description information or amend the fed back problem description information, and the problem description information confirmed by the user is that newly written or amended by the user.

Then, the problem description information confirmed by the user is taken as the finally determined problem description information, namely the correct problem description information. The correct problem description information and the fault multimedia content may be taken as a new historical sample to optimize the fault analysis model. When there is the image database, the correct problem description information and the fault multimedia content may be stored in the image database as a new record item, and then the fault analysis model may be optimized based on the updated image database.

The image database may be a cloud image database. With the cloud image database, the fault analysis model can be fully trained and updated in time due to the amount of fault multimedia content and problem description information in the cloud image database is huge, thus the accuracy of the fault analysis model will be very high.

In the examples of the present disclosure, the problem description information may include a fault type and corresponding fault description.

At block 103, the problem description information is analyzed, and a diagnosis report is obtained.

In an example, the problem description information may be analyzed by a diagnosis package of the robot, and the diagnosis package may input the problem description information into a pre trained fault diagnosis model based on convolutional neural network, and obtain a diagnosis report output by the fault diagnosis model. The fault diagnosis model is trained by taking a large number of historical problem description information as the input samples, and taking the historical diagnosis report corresponding to each piece of historical problem description information as the output samples. In an example, the historical problem description information and corresponding historical diagnosis report may be stored in a diagnosis management database.

The diagnosis management database may be a cloud diagnosis management database. With the cloud diagnosis management database, the fault diagnosis model can be fully trained and updated in time due to the amount of diagnosis and diagnosis report in the cloud diagnosis management database is huge, thus the accuracy of the fault diagnosis model will be very high.

At block 104, according to the diagnosis report, a video solution and/or document solution for the fault is obtained based on a knowledge map, and the solution is recommended to the user. The knowledge map may include: nodes representing the fault, video solution and/or document solution, and multiple edges representing the relationship between nodes.

In an example, the video solution and/or document solution for the fault may be obtained by a recommendation engine of the robot.

The knowledge map may be an instructional resources knowledge map, and the knowledge map may be a cloud knowledge map. With the cloud knowledge map, the instructional resources can be shared by different factories, and because the instructional resources are abundant, the user can get timely and efficient guidance.

An example will be taken to illustrate above mentioned scheme hereinafter.

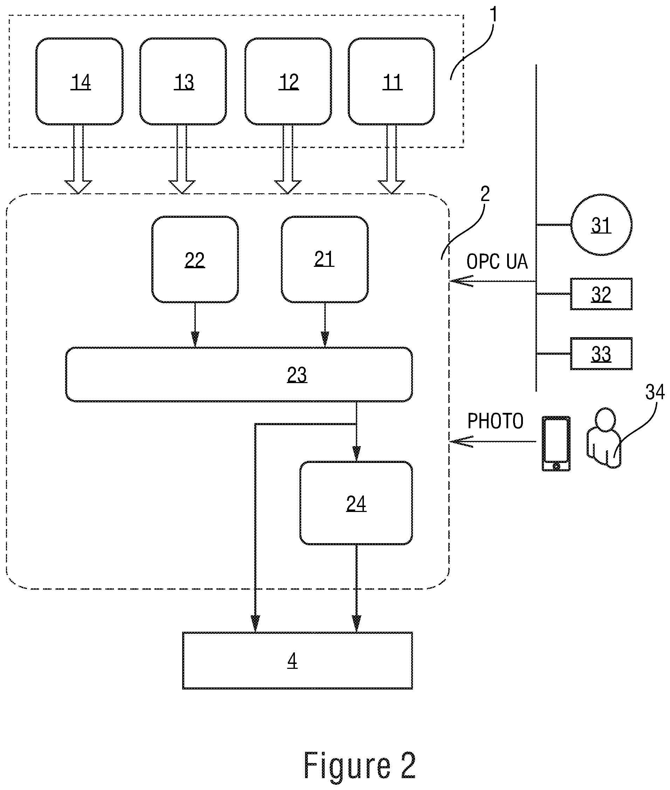

Figure 2 is a schematic diagram illustrating an application scenario according to an example of the present disclosure. As shown in figure 2, in the application scenario, there are a database layer 1 and an analysis layer 2.

In the database layer 1, there are a task management database 11, an image database 12, an instructional resources knowledge map 13 and a diagnosis management database 14. The databases 11, 12, 13 and 14 may be cloud database or local database.

The task management database 11 stores task documents including the standard processes and steps of each task of each device. The image database 12 stores a large number of historical fault multimedia content and the corresponding historical problem description information of fault multimedia content. The instructional resources knowledge map 13 includes nodes representing the fault, video solution and/or document solution, and multiple edges representing the relationship between nodes. The diagnosis management database 14 stores a large number of historical problem description information and corresponding historical diagnosis report.

In the analysis layer 2, there are a data stream analysis package 21, a multimedia content analysis package 22, a diagnosis package 23 and a recommendation engine 24. The data stream analysis package 21and the multimedia content analysis package 22 may be included in an analysis module of a robot, the diagnosis package 23 may be a diagnosis module of the robot, and the recommendation engine 24 may be a recommendation module of the robot.

Data stream with device identification and time information of a machine, such as a motor 31, a PLC 32 and a CNC 33 may be transmitted to a data collection module of the robot, and corresponding data stream is provided to the data stream analysis package 21 based on OPC UA protocol. Photo or video taken by a user 34 may be sent to the data collection module and then provide to the multimedia content analysis package 22.

A diagnosis report out by the diagnosis package 23 and the solution recommended by the recommendation engine 24 may be displayed on a screen 4, such as the screen of the robot.

Of course, in another example, the robot may be replaced by other devices for diagnosis and solution recommendation.

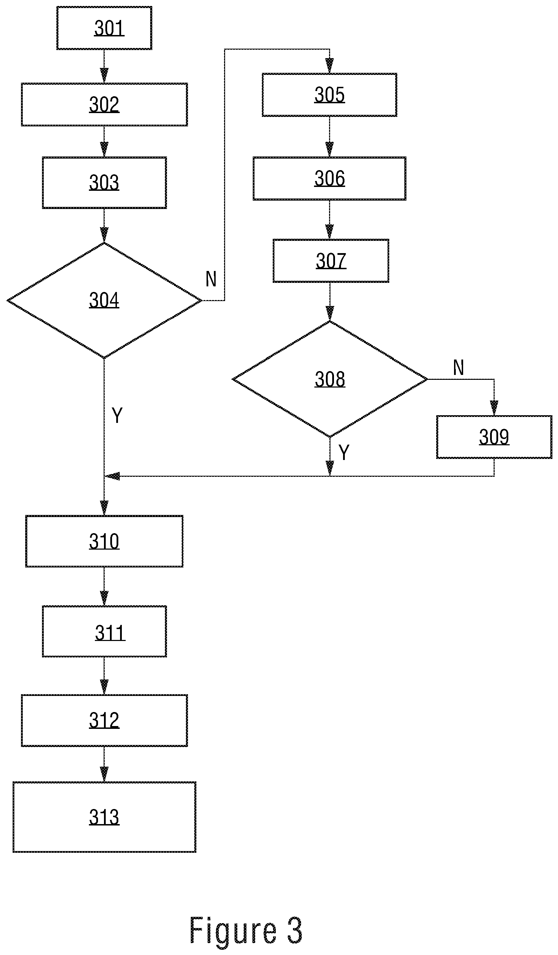

Figure 3 is a flow diagram illustrating method for fault diagnosis and solution recommendation based on the application scenario shown in figure 2 according to the example of the present disclosure. As shown in figure 3, the method may include the following processes.

At block 301, a user calls the robot, namely the robot receives a fault report.

At block 302, data stream is collected from the machines and corresponding task document from the task management database is obtained.

At block 303, the data stream and the task document are provided to the data stream analysis package, and the data stream analysis package analyzes the data steam based on a comparison between the data stream and the task document.

At block 304, it is determined that whether correct problem description information is obtained. When the correct problem description information is obtained, block 310 is performed; otherwise, block 305 is performed.

At block 305, the user is instructed to take a photo of the problem.

At block 306, the photo uploaded by the user is received.

At block 307, the photo is provided to the multimedia content analysis package, and the multimedia content analysis package analyzes the photo.

At block 308, obtained problem description information is fed back to the user, and it is determined by the user whether correct problem description information is obtained. When the correct problem description information is obtained, block 310 is performed; otherwise, block 309 is performed.

At block 309, amended or newly written problem description information by the user is received, and the amended or newly written problem description information is taken as correct problem description information.

At block 310, the problem description information is provided to the diagnosis package generated based on convolutional neural network.

At block 311, the diagnosis package analyzes the problem description information and generates a diagnosis report.

At block 312, the diagnosis report is provided to the recommendation engine, and the recommendation engine recommends a corresponding solution based on a knowledge graph.

At block 313, the image database is updated based on a feedback about the problem description information from the user and a fault analysis model is updated based on updated image database.

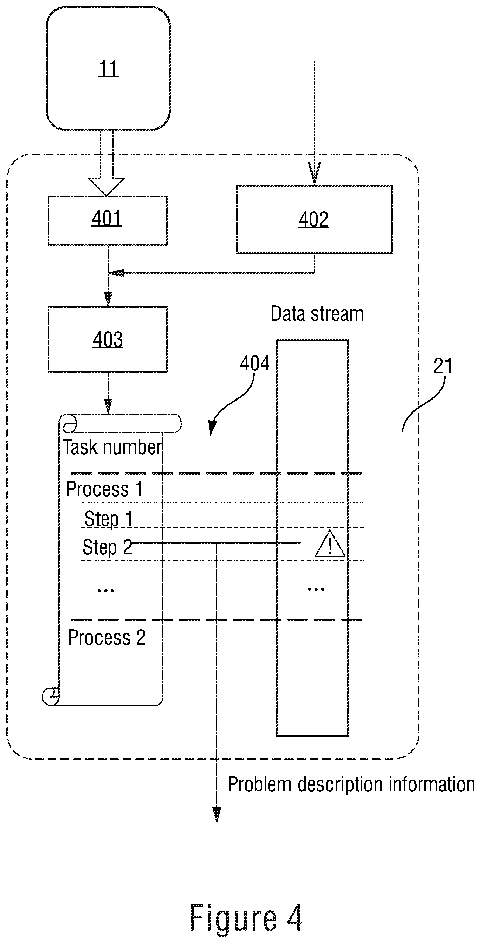

Figure 4 is a schematic diagram illustrating the working principle of the data stream analysis package 21 in the application scenario shown in figure 2 according to an example of the present disclosure. As shown in figure 4, the working principle may include the following processes.

At block 401, a task list is obtained from the task management database 11.

At block 402, a machine number and a timestamp are obtained based on the OPC UA.

At block 403, a task document is obtained according to the task list, the machine number and the timestamp.

At block 404, data stream obtained based on the OPC UA is divided into multiple data segments according to the processes and steps in each process in the task document, and the target step with a fault is determined by location an error signal in a data segment, and then the part corresponding to the target step in the task document is compared with that in the data stream and the fault reason is analyzed based on the comparison, and the problem description information is generated.

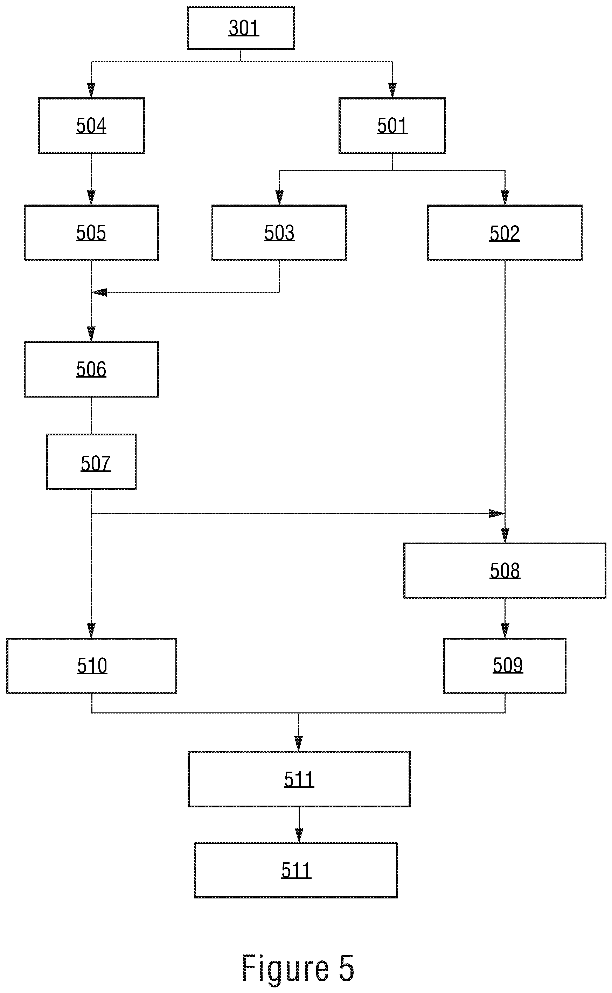

Figure 5 is a flow diagram illustrating a data stream analysis method performed by the data stream analysis package shown in figure 4. As shown in figure 5, the method may include the following processes.

At block 501, in response to receiving a fault report in block 301, a first data is received from machines.

At block 502, data stream in the first data is recorded.

At block 503, a machine number and timestamps are read from the first data.

At block 504, in response to receiving a fault report in block 301, a second data is read from the task management database.

At block 505, a list of tasks (also called task list) is read from the second data.

At block 506, according to the machine number and timestamps, a corresponding task is found.

At block 507, a task document corresponding to the task is read.

At block 508, the data stream is divided into multiple data segments based on the processes and steps in each process in the task document.

At block 509, a section or a target step with an error signal is determined and extracted.

At block 510, the corresponding part in the task document is extracted.

At block 511, the extracted section is compared with the extracted corresponding part, and is analyzed based on the comparison.

At block 512, problem description information is generated.

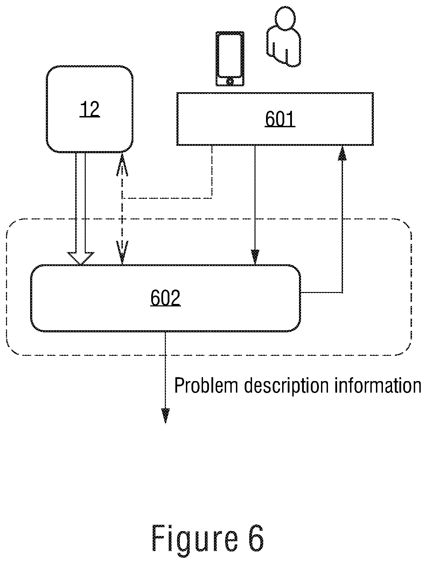

Figure 6 is a schematic diagram illustrating the working principle of the multimedia content analysis package 22 in the application scenario shown in figure 2 according to an example of the present disclosure. As shown in figure 6, the working principle may include the following processes.

At block 601, a user takes a photo utilizing an App in mobile, and uploads the photo.

At block 602, the photo is input into a fault analysis model which is trained based on a large number of historical fault multimedia content and problem description information pair stored in the image database 12. The fault analysis model performs classification on the photo and output corresponding problem description information. The problem description information is fed back to the user, and correct problem description information confirmed by the user is received. The image database 12 may be updated according to the feedback of the user, and then the fault analysis model may be updated based on updated image database 12.

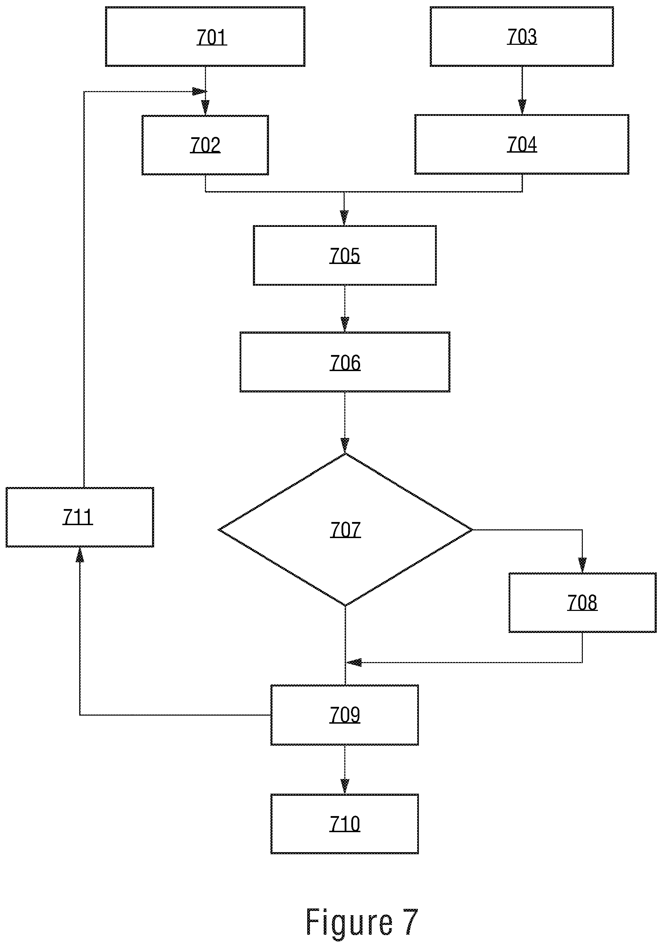

Figure 7 is a flow diagram illustrating a multimedia content analysis method performed by the multimedia content analysis package shown in figure 6. As shown in figure 7, the method may include the following processes.

At block 701, the historical fault multimedia content and problem description information pair stored in the image database 12 is analyzed.

At block 702, a fault analysis model is built based on convolutional neural network, and is trained utilizing the historical fault multimedia content and problem description information pair stored in the image database 12.

At block 703, a photo is taken and uploaded.

At block 704, in response to receiving a photo, the photo is input into the fault analysis model.

At block 705, the fault analysis model classifies the photo and generates corresponding problem description information.

At block 706, the problem description information is displayed on a screen of the robot and waiting for confirmation of the user.

At block 707, it is determined that whether correct problem description information is obtained, when the correct problem description information is obtained, block 709 is performed; otherwise, block 708 is performed.

At block 708, amended or newly written problem description information by the user is received, and the amended or newly written problem description information is taken as correct problem description information.

At block 709, a new record item consisting of the correct problem description information and the fault multimedia content pair is generated.

At block 710, the correct problem description information is provided to the diagnosis package.

At block 711, the new record item is added into the image database, and then the fault analysis model may be updated based on updated image database.

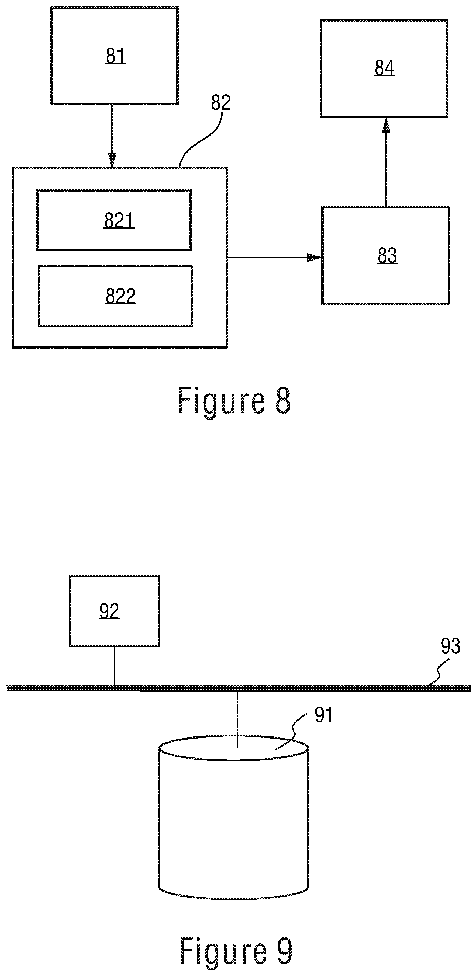

Figure 8 is a schematic diagram illustrating a device for fault diagnosis and solution recommendation according to examples of the present disclosure. The device may be used to perform the method shown in figures 1 to 7. For the contents not disclosed in detail in the device examples of the disclosure, please refer to the corresponding description in the method examples of the disclosure, and will not be repeated hereinafter. As shown in figure 8, the device may include a data obtaining module 81, a fault analysis module 82, a fault diagnosis module 83 and a solution recommendation module 84.

The data obtaining module 81 is configured to obtain original data including fault problem of a target device. The original data may include the data stream with a device identification and time information, and/or fault multimedia content. The fault multimedia content may include: a video containing fault process or a photo containing fault area.

The fault analysis module 82 is configured to analyze the original data including fault problem to obtain problem description information.

When the original data includes the data stream with device identification and time information, the fault analysis module 82 may include a data stream analysis module 821, and the data stream analysis module 821 is configured to find a corresponding task document from a task management database according to the device identification and time information of the target device; according to the standard processes and steps in the task document, to divide the data stream collected from the target device into corresponding data segments, to determine a target step with a fault by locating an error signal in a data segment, to compare the part corresponding to the target step in the task document with that in the data stream and analyze the fault reason based on the comparison, and to generate the problem description information.

When the original data includes the multimedia content, the fault analysis module 82 may include a multimedia content analysis module 822, and the multimedia content analysis module 822 is configured to input the fault multimedia content into a fault analysis model trained in advance based on convolutional neural network, and to obtain the problem description information output by the fault analysis model.

Furthermore, the multimedia content analysis module 822 feeds back the problem description information to the user for checking, and receives problem description information confirmed by the user. Then, the multimedia content analysis module 822 takes the problem description information confirmed by the user as the finally determined problem description information.

The fault diagnosis module 83 is configured to analyze the problem description information to obtain a diagnosis report. The fault diagnosis module 803 may input the problem description information into a pre trained fault diagnosis model based on convolutional neural network, and obtain a diagnosis report output by the fault diagnosis model.

The solution recommendation module 84 is configured to obtain obtaining a video and/or document solution for the fault based on a knowledge map according to the diagnosis report, and to recommend the video and/or document solution to a user. The knowledge map comprises: nodes representing the fault, video solution and/or document solution, and multiple edges representing the relationship between nodes.

In fact, the device for fault diagnosis and solution recommendation provided by this implementation manner of the present disclosure may be specifically implemented in various manners. For example, the device for fault diagnosis and solution recommendation may be compiled, by using an application programming interface that complies with a certain regulation, as a plug-in that is installed in an intelligent terminal, or may be encapsulated into an application program for a user to download and use.

When compiled as a plug-in, the device for fault diagnosis and solution recommendation may be implemented in various plug-in forms such as ocx, dll, and cab. The device for fault diagnosis and solution recommendation provided by this implementation manner of the present disclosure may also be implemented by using a specific technology, such as a Flash plug-in technology, a RealPlayer plug-in technology, an MMS plug-in technology, a MIDI staff plug-in technology, or an ActiveX plug-in technology.

The method for fault diagnosis and solution recommendation provided by this implementation manner of the present disclosure may be stored in various storage mediums in an instruction storage manner or an instruction set storage manner. These storage mediums include, but are not limited to: a floppy disk, an optical disc, a DVD, a hard disk, a flash memory, a USB flash drive, a CF card, an SD card, an MMC card, an SM card, a memory stick, and an xD card.

In addition, the method for fault diagnosis and solution recommendation provided by this implementation manner of the present disclosure may also be applied to a storage medium based on a flash memory (Nand flash), such as USB flash drive, a CF card, an SD card, an SDHC card, an MMC card, an SM card, a memory stick, and an xD card.

Moreover, it should be clear that an operating system operated in a computer can be made, not only by executing program code read by the computer from a storage medium, but also by using an instruction based on the program code, to implement some or all actual operations, so as to implement functions of any embodiment in the foregoing embodiments.

For example, figure 9 is a schematic diagram illustrating another device for fault diagnosis and solution recommendation according to examples of the present disclosure. The device may be used to perform the method shown in figures 1-7, or to implement the device in figure 8. As shown in figure 9, the device may include at least one memory 91 and at least one processor 92. In addition, some other components may be included, such as communication port, input/output controller, network communication interface, etc. These components communicate through bus 93, etc.

At least one memory 91 is configured to store a computer program 911. In one example, the computer program can be understood to include various modules of the device shown in figure 8. In addition, at least one memory 91 may store an operating system or the like. Operating systems include but are not limited to: Android operating system, Symbian operating system, windows operating system, Linux operating system, etc.

At least one processor 92 is configured to call the computer program stored in at least one memory 91 to perform a method for fault diagnosis and solution recommendation described in examples of the present disclosure. The processor 92 can be CPU, processing unit/module, ASIC, logic module or programmable gate array, etc. It can receive and send data through the communication port.

The I/O controller has a display and an input device, which is used to input, output and display relevant data.

The present disclosure also provides a system for fault diagnosis and solution recommendation. The system may include the device shown in figure 8 or figure 9, the task management database 11, the image database 12 and the instructional resources knowledge map 13 shown in figure 2.

In the present disclosure, because all of the fault analysis, fault diagnosis and solution recommendation are performed by the third party, the user only needs to do some simple operations without analyzing the fault reason, thus the intelligent fault diagnosis and solution recommendation is achieved, and the flexibility and efficiency of fault diagnosis and solution recommendation is improved.

It should be understood that, as used herein, unless the context clearly supports exceptions, the singular forms "a" ("a", "an", "the") are intended to include the plural forms. It should also be understood that, "and / or" used herein is intended to include any and all possible combinations of one or more of the associated listed items.

## Claims

1. A method for fault diagnosis and solution recommendation, **characterized in that**, comprises:
obtaining (S101) original data including fault problem of a target device, wherein original data including fault problem comprises:
data stream with device identification and time information; and
fault multimedia content, and the fault multimedia content comprises a video containing fault process or a photo containing fault area;
analyzing (S102) the original data including fault problem to obtain problem description information,
wherein analyzing the original data including fault problem to obtain problem description information comprises:
obtaining a task document from a cloud task management database according to the device identification and time information; the cloud task management database stores task documents comprising the standard processes and steps of each task of each device;
dividing the data stream into corresponding data segments according to the standard processes and steps in the task document;
determining a target step with a fault by locating an error signal in a data segment;
comparing the part corresponding to the target step in the task document with that in the data stream, analyzing a fault reason based on the comparison, and generating the problem description information; and
wherein analyzing the original data including fault problem to obtain problem description information further comprises:
inputting the fault multimedia content into a fault analysis model trained in advance based on convolutional neural network, and obtaining the problem description information output by the fault analysis model; the fault analysis model is trained by taking a large number of historical fault multimedia content as input samples, and taking corresponding historical problem description information of fault multimedia content as output samples; wherein the historical fault multimedia content and corresponding historical problem description information are stored in a cloud image database;
analyzing (S103) the problem description information to obtain a diagnosis report; and
according to the diagnosis report, obtaining (S104) a video and/or document solution for the fault based on a cloud knowledge map, and recommending the solution to a user (34); the knowledge map (13) comprises: nodes representing the fault, video solution and/or document solution, and multiple edges representing the relationship between nodes.

2. The method according to claim 1, wherein obtaining original data including fault problem of a target device comprises:
collecting data stream with device identification and time information at a set frequency;
in response to receiving a fault report from the user (34), extracted corresponding data stream of the target device from the obtained data stream according to the device identification and time information provided by the fault report.

3. The method according to claim 1, wherein analyzing the problem description information to obtain a diagnosis report comprises:
inputting the problem description information into a pre trained fault diagnosis model based on convolutional neural network, and obtaining a diagnosis report output by the fault diagnosis model; the fault diagnosis model is trained by taking a large number of historical problem description information as the input samples, and taking the historical diagnosis report corresponding to each piece of historical problem description information as the output samples.

4. The method according to one of the preceding claims, wherein the fault analysis model comprises a multimedia content classification model and multiple fault analysis sub models;
the multimedia content classification model is to classify the multimedia content, and input the multimedia content to a corresponding fault analysis sub model according to a classification result;
each fault analysis sub model is to output corresponding problem description information according to the input multimedia content.

5. The method according to one of the preceding claims, further comprising:
feeding back the problem description information to the user (34) for checking, and receiving problem description information confirmed by the user (34);
taking the problem description information confirmed by the user (34) as finally determined problem description information;
storing the finally determined problem description information and the fault multimedia content in the cloud image database as a new historical sample to optimize the fault analysis model.

6. A device for fault diagnosis and solution recommendation, comprising:
at least one memory (91), to store a computer program (911); and
at least one processor (92), to call the computer program (911) stored in the at least one memory (91) to perform a method for fault diagnosis and solution recommendation according to any one of claims 1 to 5.

7. A system for fault diagnosis and solution recommendation, comprising:
a device for fault diagnosis and solution recommendation according to claim 6;
a cloud task management database, to store task documents including the standard processes and steps of each task of each device;
a cloud image database, to store historical fault multimedia content and corresponding historical problem description information of fault multimedia content; and
an cloud instructional resources knowledge map (13), to comprises nodes representing a fault, a video solution and/or document solution, and multiple edges representing the relationship between nodes.

8. A non-transitory computer-readable storage medium, on which a computer program (911) is stored, wherein the computer program (911) is to be executed by a processor (92) to implement a method for fault diagnosis and solution recommendation according to any one of claims 1 to 5.

## Patentansprüche

1. Verfahren zur Fehlerdiagnose und Lösungsempfehlung, **dadurch gekennzeichnet, dass** es Folgendes umfasst:
Erhalten (S101) von Ausgangsdaten, die ein Fehlerproblem einer Zielvorrichtung beinhalten, wobei die Ausgangsdaten, die ein Fehlerproblem beinhalten, Folgendes umfassen:
einen Datenstrom mit Vorrichtungsidentifizierungs- und Zeitinformationen; und
Fehler-Multimedia-Inhalt, und der Fehler-Multimedia-Inhalt ein Video umfasst, das einen Fehlerprozess enthält, oder in Foto, das einen Fehlerbereich enthält;
Analysieren (S102) der Ausgangsdaten, die ein Fehlerproblem beinhalten, um Problembeschreibungsinformationen zu erhalten, wobei das Analysieren der Ausgangsdaten, die ein Fehlerproblem beinhalten, um Problembeschreibungsinformationen zu erhalten, Folgendes umfasst:
Erhalten eines Aufgabendokuments von einer Cloud-Datenbank zur Aufgabenverwaltung gemäß den Vorrichtungsidentifizierungs- und Zeitinformationen;
wobei die Cloud-Datenbank zur Aufgabenverwaltung Aufgabendokumente speichert, welche die Standardprozesse und Schritte jeder Aufgabe jeder Vorrichtung umfassen;
Teilen des Datenstroms in entsprechende Datensegmente gemäß den Standardprozessen und Schritten in dem Aufgabendokument;
Bestimmen eines Zielschritts mit einem Fehler durch Lokalisieren eines Fehlersignals in einem Datensegment;
Vergleichen des Teils, der dem Zielschritt in dem Aufgabendokument entspricht, mit dem in dem Datenstrom, Analysieren eines Fehlergrundes, basierend auf dem Vergleich, und Erzeugen der Problembeschreibungsinformationen; und
wobei das Analysieren der Ausgangsdaten, die ein Fehlerproblem beinhalten, um Problembeschreibungsinformationen zu erhalten, ferner Folgendes umfasst:
Eingeben des Fehler-Multimedia-Inhalts in ein im Vorhinein trainiertes Fehleranalysemodell, das auf einem neuronalen Faltungsnetz basiert, und Erhalten der durch das Fehleranalysemodell ausgegebenen Problembeschreibungsinformationen; wobei das Fehleranalysemodell trainiert wird, indem eine große Menge historischen Fehler-Multimedia-Inhalts als Eingabestichproben genommen wird und entsprechende historische Problembeschreibungsinformationen von Fehler-Multimedia-Inhalt als Ausgabestichproben genommen werden; wobei der historische Fehler-Multimedia-Inhalt und die entsprechenden historischen Problembeschreibungsinformationen in einer Cloud-Bilddatenbank gespeichert sind;
Analysieren (S103) der Problembeschreibungsinformationen, um einen Diagnosebericht zu erhalten; und
gemäß dem Diagnosebericht Erhalten (S104) einer Video- und/oder Dokumentlösung für den Fehler, basierend auf einem Cloud-Wissensstandabbild, und Empfehlen der Lösung für einen Benutzer (34); wobei das Wissensstandabbild (13) Folgendes umfasst: Knoten, die den Fehler darstellen, Videolösung und/oder Dokumentlösung und mehrere Ränder (Edges), die die Beziehung zwischen den Knoten darstellen.

2. Verfahren nach Anspruch 1, wobei das Erhalten von Ausgangsdaten, die ein Fehlerproblem einer Zielvorrichtung beinhalten, Folgendes umfasst:
Erfassen des Datenstroms mit den Vorrichtungsidentifizierungs- und Zeitinformationen mit einer festgelegten Frequenz;
in Reaktion auf das Empfangen eines Fehlerberichts von dem Benutzer (34) Extrahieren des entsprechenden Datenstroms der Zielvorrichtung aus dem erhaltenen Datenstrom gemäß den von einem Fehlerbericht bereitgestellten Vorrichtungsidentifizierungs- und Zeitinformationen.

3. Verfahren nach Anspruch 1, wobei das Analysieren der Problembeschreibungsinformationen, um einen Diagnosebericht zu erhalten, Folgendes umfasst:
Eingeben der Problembeschreibungsinformationen in ein vorab trainiertes Fehlerdiagnosemodell, das auf einem neuronalen Faltungsnetz basiert, und Erhalten eines durch das Fehleranalysemodell ausgegebenen Diagnoseberichts; wobei das Fehleranalysemodell trainiert wird, indem eine große Menge historischer Problembeschreibungsinformationen als Eingabestichproben genommen wird und der historische Diagnosebericht, der jedem Teil der historischen Problembeschreibungsinformationen entspricht, als Ausgabestichproben genommen wird.

4. Verfahren nach einem der vorhergehenden Ansprüche, wobei das Fehlerdiagnosemodell ein Modell zum Klassifizieren von Multimedia-Inhalt und mehrere Fehleranalyseteilmodelle umfasst; wobei das Modell zum Klassifizieren von Multimedia-Inhalt dafür vorgesehen ist, Multimedia-Inhalt zu klassifizieren, und gemäß einem Klassifizierungsergebnis den Multimedia-Inhalt in ein entsprechendes Fehleranalyseteilmodell einzugeben;
wobei jedes Fehleranalyseteilmodell dafür vorgesehen ist, entsprechende Problembeschreibungsinformationen gemäß dem eingegebenen Multimedia-Inhalt auszugeben.

5. Verfahren nach einem der vorstehenden Ansprüche, ferner umfassend:
Zurückmelden der Problembeschreibungsinformationen an den Benutzer (34) zur Prüfung und Empfangen von Problembeschreibungsinformationen, die von dem Benutzer (34) bestätigt wurden;
Nehmen der vom Benutzer (34) bestätigten Problembeschreibungsinformationen als letztendlich bestimmte Problembeschreibungsinformationen;
Speichern der letztendlich bestimmten Problembeschreibungsinformationen und des Fehler-Multimedia-Inhalts in der Cloud-Bilddatenbank als eine neue historische Stichprobe zum Optimieren des Fehlerdiagnosemodells.

6. Vorrichtung zur Fehlerdiagnose und Lösungsempfehlung, umfassend:
mindestens einen Speicher (91) zum Speichern eines Computerprogramms (911); und
mindestens einen Prozessor (92) zum Aufrufen des in dem mindestens einen Speicher (91) gespeicherten Computerprogramms (911), um ein Verfahren zur Fehlerdiagnose und Lösungsempfehlung nach einem der Ansprüche 1 bis 5 durchzuführen.

7. System zur Fehlerdiagnose und Lösungsempfehlung, umfassend:
eine Vorrichtung zur Fehlerdiagnose und Lösungsempfehlung nach Anspruch 6;
eine Cloud-Datenbank zur Aufgabenverwaltung zum Speichern von Aufgabendokumenten, die die Standardprozesse und Schritte jeder Aufgabe jeder Vorrichtung beinhalten;
eine Cloud-Bilddatenbank zum Speichern historischen Fehler-Multimedia-Inhalts und entsprechender historischer Problembeschreibungsinformationen von Fehler-Multimedia-Inhalt; und
ein Cloud-Anweisungsressourcen-Wissensstandabbild (13), das Knoten, die einen Fehler darstellen, eine Videolösung und/oder Dokumentlösung und mehrere Ränder, die die Beziehung zwischen den Knoten darstellen, umfasst.

8. Nichtflüchtiges computerlesbares Speichermedium, auf dem ein Computerprogramm (911) gespeichert ist, wobei das Computerprogramm (911) durch einen Prozessor (92) ausgeführt werden soll, um ein Verfahren zur Fehlerdiagnose und Lösungsempfehlung nach einem der Ansprüche 1 bis 5 zu implementieren.

## Revendications

1. Procédé de diagnostic de défaillance et de recommandation de solution, **caractérisé en ce qu'**il comprend :
l'obtention (S101) de données d'origine comportant un problème de défaillance d'un dispositif cible, les données d'origine comportant un problème de défaillance comprenant :
un flux de données avec identification de dispositif et informations temporelles ; et
un contenu multimédia de défaillance, et le contenu multimédia de défaillance comprend un processus de défaillance contenant une vidéo ou une zone de défaillance contenant une photo ;
l'analyse (S102) des données d'origine comportant le problème de défaillance pour obtenir des informations de description de problème,
dans lequel l'analyse des données d'origine comportant le problème de défaillance pour obtenir des informations de description de problème comprend :
l'obtention d'un document de tâche à partir d'une base de données de gestion de tâches en nuage selon l'identification de dispositif et les informations temporelles ;
la base de données de gestion de tâches en nuage stocke des documents de tâches comprenant les processus et étapes standards de chaque tâche de chaque dispositif ;
la division du flux de données en segments de données correspondants selon les processus et étapes standards dans le document de tâches ;
la détermination d'une étape cible avec une défaillance en localisant un signal de défaillance dans un segment de données ;
la comparaison de la partie correspondant à l'étape cible dans le document de tâches avec celle dans le flux de données,
l'analyse d'une raison de défaillance basée sur la comparaison et la génération des informations de description de problème ; et
dans lequel l'analyse des données d'origine comportant le problème de défaillance pour obtenir des informations de description de problème comprend en outre :
l'entrée du contenu multimédia de défaillance dans un modèle d'analyse de défaillance entraîné à l'avance sur la base d'un réseau neuronal convolutif, et l'obtention des informations de description de problème sorties par le modèle d'analyse de défaillance ; le modèle d'analyse de défaillance est entraîné en prenant un grand nombre de contenus multimédias historiques de défaillance comme échantillons d'entrée, et en prenant les informations historiques correspondantes de description de problème des contenus multimédias de défaillance comme échantillons de sortie ; dans lequel les contenus multimédias historiques de défaillance et les informations historiques de description de problème correspondantes sont stockés dans une base de données d'images en nuage ;
l'analyse (S103) des informations de description de problème pour obtenir un rapport de diagnostic ; et
selon le rapport de diagnostic, l'obtention (S104) d'une solution vidéo et/ou documentaire pour la défaillance sur la base d'une carte de connaissances en nuage, et la recommandation de la solution à un utilisateur (34) ; la carte de connaissances (13) comprend : des nœuds représentant la défaillance, une solution vidéo et/ou une solution documentaire, et de multiples arêtes représentant la relation entre les nœuds.

2. Procédé selon la revendication 1, dans lequel l'obtention de données d'origine comportant un problème de défaillance d'un dispositif cible comprend :
la collecte de flux de données avec identification de dispositif et informations temporelles à une fréquence déterminée ;
en réponse à la réception d'un rapport de défaillance en provenance de l'utilisateur (34), l'extraction d'un flux de données correspondant du dispositif cible à partir du flux de données obtenu selon l'identification de dispositif et les informations temporelles fournies par le rapport de défaillance.

3. Procédé selon la revendication 1, dans lequel l'analyse des informations de description de problème pour obtenir un rapport de diagnostic comprend :
l'entrée des informations de description de problème dans un modèle de diagnostic de défaillance préentraîné basé sur un réseau neuronal convolutif, et l'obtention d'un rapport de diagnostic sorti par le modèle de diagnostic de défaillance ; le modèle de diagnostic de défaillance est entraîné en prenant un grand nombre d'informations historiques de description de problème comme échantillons d'entrée, et en prenant le rapport de diagnostic historique correspondant à chaque élément d'informations historiques de description de problème comme échantillons de sortie.

4. Procédé selon l'une des revendications précédentes, dans lequel le modèle d'analyse de défaillance comprend un modèle de classification de contenu multimédia et de multiples sous-modèles d'analyse de défaillance ;
le modèle de classification de contenu multimédia est destiné à classifier le contenu multimédia et à entrer le contenu multimédia dans un sous-modèle d'analyse de défaillance correspondant selon un résultat de classification ;
chaque sous-modèle d'analyse de défaillance doit sortir des informations de description de problème correspondantes selon le contenu multimédia entré.

5. Procédé selon l'une des revendications précédentes, comprenant en outre :
la réinjection des informations de description de problème vers l'utilisateur (34) pour vérification, et la réception d'informations de description de problème confirmées par l'utilisateur (34) ;
la prise en compte des informations de description de problème confirmées par l'utilisateur (34) en tant qu'informations de description de problème finalement déterminées ;
le stockage des informations de description de problème finalement déterminées et de contenu multimédia de défaillance dans la base de données d'images en nuage sous forme d'un nouvel échantillon historique pour optimiser le modèle d'analyse de défaillance.

6. Dispositif de diagnostic de défaillance et de recommandation de solution, comprenant :
au moins une mémoire (91), pour stocker un programme informatique (911) ; et
au moins un processeur (92), pour appeler le programme informatique (911) stocké dans l'au moins une mémoire (91) pour effectuer un procédé pour le diagnostic de défaillance et la recommandation de solution selon l'une quelconque des revendications 1 à 5.

7. Système de diagnostic de défaillance et de recommandation de solution, comprenant :
un dispositif de diagnostic de défaillance et de recommandation de solution selon la revendication 6 :
une base de données de gestion de tâches en nuage, pour stocker des documents de tâches comportant les processus et étapes standards de chaque tâche de chaque dispositif ;
une base de données d'images en nuage, pour stocker un contenu multimédia historique de défaillance et des informations historiques de description de problème correspondantes du contenu multimédia de défaillance ; et
une carte de connaissances de ressources pédagogiques en nuage (13), qui comprend des nœuds représentant une défaillance, une solution vidéo et/ou une solution documentaire, et des arêtes multiples représentant la relation entre les nœuds.

8. Support de stockage non transitoire lisible par ordinateur, sur lequel un programme d'ordinateur (911) est stocké, dans lequel le programme d'ordinateur (911) doit être exécuté par un processeur (92) pour mettre en œuvre un procédé de diagnostic de défaillance et de recommandation de solution selon l'une quelconque des revendications 1 à 5.
